# EUROPÄISCHE PATENTSCHRIFT

(11) **EP 2 938 848 B1**
(45) Veröffentlichungstag und Bekanntmachung des Hinweises auf die Patenterteilung: **31.05.2017**
(21) Anmeldenummer: 14702490.5
(22) Anmeldetag: 24.01.2014
(51) Int. Cl.: F01K 23/10, F22G 5/12

(54) **DAMPFTEMPERATUR-REGELEINRICHTUNG FÜR EINE GAS- UND DAMPFTURBINENANLAGE**
STEAM-TEMPERATURE CONTROL DEVICE FOR A GAS- AND STEAM TURBINE PLANT
DISPOSITIF DE RÉGULATION DE TEMPÉRATURE DE VAPEUR CONÇU POUR UN ENSEMBLE TURBINE À GAZ ET À VAPEUR

(30) Priorität: 12.02.2013 DE 102013202249
(43) Veröffentlichungstag der Anmeldung: 04.11.2015
(73) Patentinhaber: Siemens Aktiengesellschaft, 80333 München (DE)
(72) Erfinder: ZUBROD, Horst, 91080 Uttenreuth (DE)
(86) Internationale Anmeldenummer: PCT/EP2014/051408
(87) Internationale Veröffentlichungsnummer: WO 2014/124790

(56) Entgegenhaltungen:
- EP-A2- 2 172 622
- DE-A1- 3 121 442
- DE-A1-102010 040 624
- DE-A1-102010 043 683

## Beschreibung

Die Erfindung betrifft eine Dampftemperatur-Regeleinrichtung für eine Gas- und Dampfturbinenanlage und bezieht sich auf die Vorwärmung des Einspritzwassers. Die Erfindung betrifft ferner ein Verfahren zur Dampftemperaturregelung in einer Gas- und Dampfturbinenanlage.

Moderne Gas- und Dampfturbinenanlagen werden für hohe Dampftemperaturen ausgelegt, die das heute verfügbare Rohrmaterial auf Stahlbasis bis an die zulässigen Grenzen belastet. Hinzu kommt, dass von diesen Anlagen zusätzlich ein erhebliches Maß an betrieblicher Flexibilität - z.B. tägliches schnelles Anfahren - verlangt wird, was zu einer zusätzlichen erheblichen Belastung des Rohrmaterials führt.

Um sicherzustellen, dass bei allen möglichen Betriebszuständen die Dampftemperatur am Austritt der Abhitzedampferzeugers (AHDE) die maximal zulässige bzw. die prozesstechnisch erforderliche Temperatur nicht überschreitet, sind in den Überhitzerteilen der Abhitzedampferzeuger Dampftemperatur-Regeleinrichtungen vorgesehen. Diese Dampftemperatur-Regeleinrichtungen funktionieren nach dem Mischungsprinzip, d.h. kaltes Medium wird dem heißen, zu regelnden Medium (üblicherweise Dampf) beigemischt.

Im Kraftwerksbereich hat sich für diese Art von Dampftemperaturregelung der Begriff Einspritzkühler etabliert. Die DE 10 2010 040624 A1 offenbart eine Kraftwerksanlage umfassend einen Dampferzeuger mit entsprechenden Einspritzventilen.

Die übliche Ausführung und Anordnung der Einspritzkühler-Systeme in Abhitzedampferzeugern von Gas- und Dampfturbinen-Anlagen führt zu hoher Belastung der Einspritzkühler und dem nachfolgenden Drucksystem, die in der Folge hier zu Schäden führen kann.

Typische Schäden sind Beispielsweise:
- Risse in den Einspritzdüsen der Einspritzkühler
- Abriss des Einspritzstocks der Kühler
- Risse und Verzug im Schutzhemd der Kühler
- Risse in den Rohrleitungen
- Erosion an den Einspritzungen nachgeordneter Strecken

Diese Schäden sind im Wesentlichen auf zwei Gründe zurückzuführen: Thermoschock und Tropfenerosion.

Mit steigenden Dampftemperaturen und der vom Markt geforderten Flexibilität der Gas- und Dampfturbinen-Anlagen steigt die Schadenswahrscheinlichkeit stark.

Bei heute übliche Ausführung des Einspritzsystems ist es unerheblich ob ein Trommelkessel oder ein Zwangsdurchlaufkessel vorliegt. Das Einspritzwasser wird zwischen einem Speisewasserschieber und einem Speisewasserregelventil entnommen und über eine Einspritzwasserleitung zu den Einspritzkühlern geführt. Damit bei nicht aktiver Einspritzung das Einspritzwasser nicht zu stark abkühlt, ist eine Zirkulationsleitung vorhanden, die das Einspritzwasser wieder zum Vorwärmerteil des Abhitzekessels hinter dem Speisewasserregelventil rückführt ("Einspritzwasserrückführung").

Der für die Vernebelung des Wassers im Einspritzkühler nötige Vordruck wird dadurch sichergestellt, dass ein Druckverlust zwischen Speisewasserregelventil und der Einspritzsteile vorhanden ist. Dieser Druckunterschied ist auch der Antrieb für das beschriebene Warmhaltesystem mit Zirkulationsleitung.

Bei dieser Anordnung ergibt sich ein sehr großer Temperaturunterschied (>300K) zwischen dem Einspritzmedium (Speisewasser) und dem Dampf an der Einspritzstelle. Die Gefahr von Thermoschocks ist erhöht. Zudem führt das im Vergleich zum Dampf sehr kalte Einspritzwasser dazu, dass die nötige Strecke zur Tropfenauflosung in der Dampfströmung hinter dem Einspritzkühler wesentlich mehr verlängert werden muss, um der Gefahr einer Tropfenerosion entgegenzuwirken.

Eine mögliche Verbesserung der Verhältnisse am und um den Einspritzbereich kann dadurch erreicht werden, dass das Einspritzwasser bei höheren Temperaturen entnommen wird. Hierdurch kann sowohl die Gefahr von Thermoschocks wie auch die Problematik der Tropfenerosion wesentlich verbessert werden.

Damit der nötige Vordruck für das Einspritzwasser weiterhin aufrecht erhalten werden kann, muss das Regelventil ebenfalls versetzt werden.

Alternativ ist statt der Verschiebung des Regelventils der Einsatz eines "Pinch Valve" genannten Ventils möglich. Hierbei wird ein zusätzliches Drosselventil in die Hauptleitung (Speisewasserleitung) des Economizer-Systems (Speisewasservorwärmungs-System) eingefügt, um den nötigen Vordruck für die Einspritzung darzustellen.

Beide Möglichkeiten weisen jedoch einen wesentlichen Nachteil auf. Der gesamte Druckteil des Abhitzedampferzeugers bis zum Regelventil bzw. Pinch Valve müssen für erheblich höhere Drücke (Pumpen- Nullförderhöhe) ausgelegt werden. Hieraus resultieren deutlich höhere Kosten bedingt durch den stark erhöhten Materialeinsatz und eine Verstärkung der Tragkonstruktionen bedingt durch die bedeutend höheren Gewichte.

Aufgabe der vorliegenden Erfindung ist es daher, die genannte Vorrichtung und das genannte Verfahren weiterzuentwickeln, so dass die Ursachen für Thermoschocks und Tropfenerosion und somit das Auftreten teuerer und aufwändiger Schäden bei geringen Kosten verringert werden.

Erfindungsgemäß wird diese Aufgabe gelöst durch die Vorrichtung gemäß Anspruch 1 und das Verfahren gemäß Anspruch 5. Vorteilhafte Weiterbildungen der Erfindung sind in den jeweiligen abhängigen Ansprüchen definiert. Indem bei einer Dampftemperatur-Regeleinrichtung für eine Gas- und Dampfturbinenanlage mit einer Speisewasserleitung, einem in der Speisewasserleitung angeordneten Speisewasserregelventil und einer von der Speisewasserleitung in Strömungsrichtung des Speisewassers vor dem Speisewasserregelventil abzweigenden und in einen Einspritzkühler mündenden Einspritzwasserleitung, ein Einspritzwasser-Vorwärmer in die Einspritzwasserleitung geschaltet ist, werden die gewünschten höheren Einspritzwassertemperaturen erreicht, ohne den Economizerteil für die hohen Drücke auslegen zu müssen.

Wird kein Einspritzwasser benötigt - dies ist z.B. bei Volllast der Anlage der Fall - ist es vorteilhaft, wenn eine Einspritzwasserrückführung von der Einspritzwasserleitung abzweigt und in Strömungsrichtung des Speisewassers nach einer in der Speisewasserleitung angeordneten Speisewasservorheizfläche in die Speisewasserleitung mündet. Über diese Rückführleitung wird das heiße Speisewasser wieder zum Speisewassersystem zurückgeführt. Hierdurch wird gewährleistet, dass das Einspritzwasser vor dem Einspritzkühler hoch vorgewärmt ist und die Temperaturdifferenzen zum Dampf an der Regelstelle gering sind.

Zweckmäßiger Weise ist der Einspritzwasser-Vorwärmer in einem Abgaskanal eines Abhitzedampferzeugers angeordnet, wo er so ausgeführt werden kann, dass das Einspritzwasser mittels einer kleinen Zusatzheizfläche auf ein Niveau nahe der Siedetemperatur aufgeheizt und schließlich zu den Einspritzkühlern weitergeleitet werden kann, so dass auch bei maximalem Einspritzwasserbedarf eine merkliche Temperaturerhöhung des Speisewassers möglich ist.

Dabei ist es vorteilhaft, wenn der Einspritzwasser-Vorwärmer, bezogen auf die Strömungsrichtung eines Abgases, parallel zur Speisewasservorheizfläche in einem Rauchgastemperaturgebiet angeordnet ist, das auch bei stagnierender Strömung nicht zu einem Ausdampfen führen kann. Damit wird verhindert, dass ein unerwünschtes Ausdampfen des Einspritzwassers erfolgt.

Dieselben Vorteile ergeben sich im erfinderischen Verfahren zur Dampftemperaturregelung in einer Gas- und Dampfturbinenanlage, wonach Einspritzwasser von einer Speisewasserleitung abgezweigt und dann vorgewärmt wird und vorgewärmt mindestens einem Einspritzkühler zugeführt wird.

Vorteilhafter Weise wird Einspritzwasser im Wärmetausch mit Abgas in einem Abhitzedampferzeuger vorgewärmt, bevor es einem Einspritzkühler zugeführt wird.

Weiterhin vorteilhaft ist es, wenn das Einspritzwasser bezogen auf die Strömungsrichtung eines Abgases im Abhitzedampferzeuger parallel zum Speisewasser vorgewärmt wird.

Ferner ist es vorteilhaft, wenn rückgeführtes Einspritzwasser in Strömungsrichtung eines Speisewassers nach einer Speisewasservorheizfläche in die Speisewasserleitung eingeleitet wird.

Durch die vorgeschlagene Änderung wird die Temperaturdifferenz zwischen der Dampftemperatur am Kühler und dem Einspritzwasser gegenüber der derzeit vorliegenden Standardschaltung um >150K verringert. Dies führt zu einer wesentlichen Verringerung der Gefahr von Thermoschocks.

Da die Tropfenauflösung hinter den Einspritzkühlern ebenfalls stark von der Einspritzwasser- Temperatur abhängt, reduziert sich wegen der schnelleren Tropfenauflösung die Gefahr von Tropfenerosion in den Rohrteilen stromab der Einspritzkühler wesentlich. Da die Tropfenauflösung auf einer kürzeren Strecke erfolgt, hat dies auch einen Einfluss auf die Konstruktion der entsprechenden Druckteile.

Da die im Hauptstrang liegenden Economizerheizflächen nicht für einen erhöhten Druck ausgeführt werden müssen, ist die Lösung kostenmäßig sehr günstig, nur die kleine Zusatzheizfläche des Einspritzwasser-Vorwärmers muss für den erhöhten Druck ausgelegt werden.

Außerdem können die nötigen Armaturen des Speisewasserhauptstranges - Speisewasserschieber und Speisewasserregelventil - sowie die Druckauslegung der Economizer-Systeme analog zur derzeitigen Standardausführung belassen werden. Die Entnahme des Einspritzwassers erfolgt ebenfalls an der üblichen Stelle im System.

Die Erfindung wird beispielhaft anhand der Zeichnungen näher erläutert. Es zeigen schematisch und nicht maßstäblich:
- Figur 1: eine Dampftemperatur-Regeleinrichtung mit Trommelkessel nach dem Stand der Technik,
- Figur 2: eine Dampftemperatur-Regeleinrichtung mit Zwangdurchlaufkessel nach dem Stand der Technik,
- Figur 3: eine Einspritzwasserentnahme bei höheren Temperaturen mit Versetzen des Speisewasserregelventils nach dem Stand der Technik,
- Figur 4: eine Einspritzwasserentnahme bei höheren Temperaturen mit zusätzlichem "pinch valve" nach dem Stand der Technik,
- Figur 5: eine erfindungsgemäße Dampftemperatur-Regeleinrichtung und
- Figur 6: die parallele Anordnung von Einspritzwasser-Vorwärmer und Speisewasservorheizfläche im Abgaskanal eines Abhitzedampferzeugers.

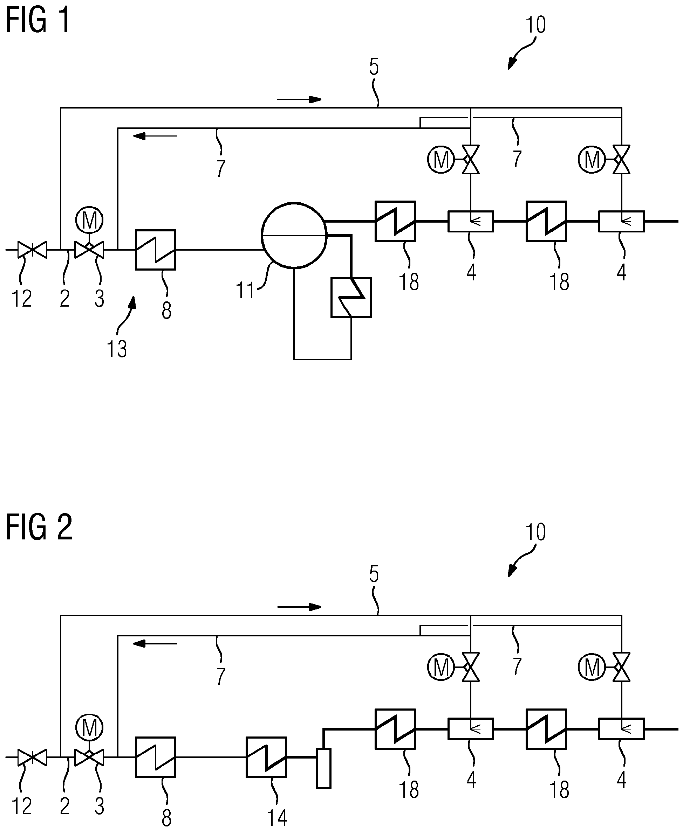

Die Figur 1 zeigt schematisch und beispielhaft eine Dampftemperatur-Regeleinrichtung 10 nach dem Stand der Technik ohne Vorwärmung des Einspritzspeisewassers und mit Trommelkessel 11.

Das Einspritzwasser wird zwischen dem Speisewasserschieber 12 und dem Speisewasserregelventil 3 der Speisewasserleitung 2 entnommen und über die Einspritzwasserleitung 5 zu den Einspritzkühlern 4 geführt, die in Strömungsrichtung eines Dampfes hinter den Überhitzern 18 angeordnet sind.

Damit bei nicht aktiver Einspritzung das Einspritzwasser nicht zu stark abkühlt, ist eine Zirkulationsleitung für die Einspritzwasserrückführung 7 vorhanden, die das Einspritzwasser wieder zum Vorwärmerteil 13 des Abhitzedampferzeugers hinter dem Speisewasserregelventil 3 und vor der Speisewasservorheizfläche 8 rückführt.

Der für die Vernebelung des Wassers im Einspritzkühler 4 nötige Vordruck wird dadurch sichergestellt, dass ein Druckverlust zwischen Speisewasserregelventil 3 und der Einspritzstelle vorhanden ist. Dieser Druckunterschied ist auch der Antrieb für das oben genannte Warmhaltesystem bzw. Rezirkulationssystem.

Die Figur 2 zeigt eine analoge Dampftemperatur-Regeleinrichtung 10 nach dem Stand der Technik ohne Vorwärmung des Einspritzspeisewassers, bei der lediglich der Trommelkessel 11 durch einen Zwangsdurchlaufkessel 14 ersetzt ist. Für die Dampftemperaturregelung ändert sich hierdurch aber im Wesentlichen nichts.

Eine Verbesserung der Temperatur-Verhältnisse am und um den Einspritzbereich kann dadurch erreicht werden, dass das Einspritzwasser bei höheren Temperaturen entnommen wird. Hierdurch kann sowohl die Gefahr von Thermoschocks wie auch die Problematik mit Tropfenerosion wesentlich verbessert werden.

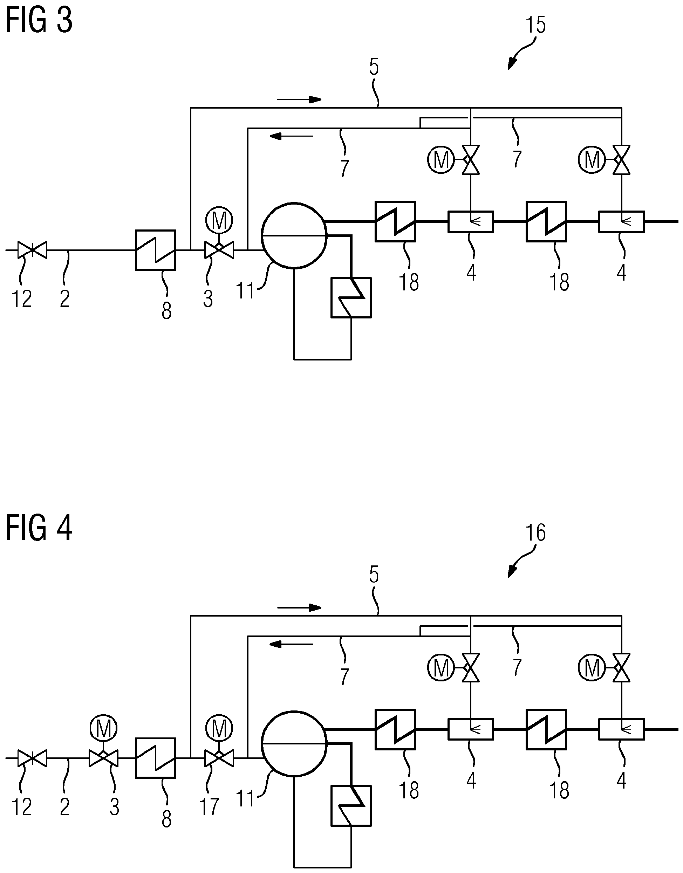

In Figur 3 ist eine typische Dampftemperatur-Regeleinrichtung 15 nach dem Stand der Technik mit einer Einspritzwasserentnahme bei höheren Temperaturen gezeigt. Damit der nötige Vordruck für das Einspritzwasser weiterhin aufrecht erhalten werden kann, muss das Regelventil 3 ebenfalls zu höheren Temperaturen im Vergleich zu den in den Figuren 1 und 2 gezeigten Regeleinrichtungen 10 versetzt werden. Die Einspritzwasserrückführung 7 erfolgt ebenfalls dichter am Verdampfer 11.

Alternativ ist in der Dampftemperatur-Regeleinrichtung 16 der Figur 4 statt der Verschiebung des Regelventils 3 der Einsatz eines sogenannten "Pinch Valves" 17 möglich.

Hierbei wird ein zusätzliches Drosselventil 17 in die Hauptleitung des Economizersystems, also die Speisewasserleitung 2 für die Speisewasservorheizung eingefügt, um den nötigen Vordruck für die Einspritzung darzustellen.

Wie bereits ausgeführt, weisen jedoch beide in den Figuren 3 und 4 gezeigten Dampftemperatur-Regeleinrichtungen 15 und 16 einen wesentlichen Nachteil auf. Der gesamte Druckteil des Abhitzekessels bis zum Regelventil 3 bzw. zum Pinch Valve 17 muss für erheblich höhere Drücke (Pumpen- Nullförderhöhe) ausgelegt werden.

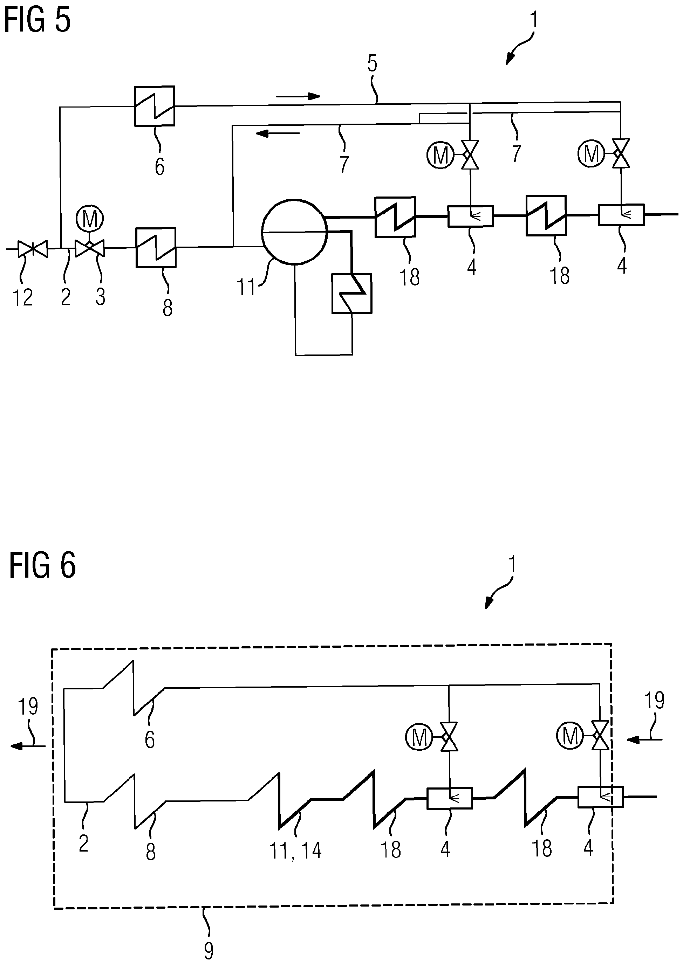

Figur 5 zeigt, wie bei der Dampftemperatur-Regeleinrichtung 1 nach der Erfindung ein separater Einspritzwasser-Vorwärmer 6 in die Einspritzwasserleitung 5 geschaltet ist, wobei der Einspritzwasser-Vorwärmer 6 in einem Abgaskanal 9 (s. Figur 6) eines Abhitzedampferzeugers angeordnet ist.

Wie auch bereits bei den Dampftemperatur-Regeleinrichtungen 15 und 16 nach dem Stand der Technik zweigt die Einspritzwasserrückführung 7 von der Einspritzwasserleitung 5 ab und mündet in Strömungsrichtung des Speisewassers nach der in der Speisewasserleitung 2 angeordneten Speisewasservorheizfläche 8 in die Speisewasserleitung 2.

Schließlich zeigt die Figur 6 die im Wesentlichen parallele Anordnung von Einspritzwasser-Vorwärmer 6 und Speisewasservorheizfläche 8 im Abgaskanal 9 eines Abhitzedampferzeugers, der vom Abgas 19 einer Gasturbine durchströmt wird.

## Patentansprüche

1. Dampftemperatur-Regeleinrichtung (1) für eine Gas- und Dampfturbinenanlage mit einer Speisewasserleitung (2), einem in der Speisewasserleitung (2) angeordneten Speisewasserregelventil (3) und einer von der Speisewasserleitung (2) in Strömungsrichtung des Speisewassers vor dem Speisewasserregelventil (3) abzweigenden und in einen Einspritzkühler (4) mündenden Einspritzwasserleitung (5), **dadurch gekennzeichnet, dass** ein Einspritzwasser-Vorwärmer (6) in die Einspritzwasserleitung (5) geschaltet ist.

2. Dampftemperatur-Regeleinrichtung (1) nach Anspruch 1, wobei eine Einspritzwasserrückführung (7) von der Einspritzwasserleitung (5) abzweigt und in Strömungsrichtung des Speisewassers nach einer in der Speisewasserleitung (2) angeordneten Speisewasservorheizfläche (8) in die Speisewasserleitung (2) mündet.

3. Dampftemperatur-Regeleinrichtung (1) nach Anspruch 2, wobei der Einspritzwasser-Vorwärmer (6) in einem Abgaskanal (9) eines Abhitzedampferzeugers angeordnet ist.

4. Dampftemperatur-Regeleinrichtung (1) nach Anspruch 3, wobei der Einspritzwasser-Vorwärmer (6) bezogen auf die Strömungsrichtung eines Abgases parallel zur Speisewasservorheizfläche (8) angeordnet ist.

5. Verfahren zur Dampftemperaturregelung in einer Gas- und Dampfturbinenanlage, **dadurch gekennzeichnet, dass** Einspritzwasser von einer Speisewasserleitung (2) abgezweigt und dann vorgewärmt wird und vorgewärmt mindestens einem Einspritzkühler (4) zugeführt wird.

6. Verfahren nach Anspruch 5, wobei Einspritzwasser im Wärmetausch mit Abgas in einem Abhitzedampferzeuger vorgewärmt wird bevor es einem Einspritzkühler (4) zugeführt wird.

7. Verfahren nach Anspruch 6, wobei das Einspritzwasser bezogen auf die Strömungsrichtung eines Abgases im Abhitzedampferzeuger parallel zum Speisewasser vorgewärmt wird.

8. Verfahren nach einem der Ansprüche 5 bis 7, wobei rückgeführtes Einspritzwasser in Strömungsrichtung eines Speisewassers nach einer Speisewasservorheizfläche (8) in die Speisewasserleitung (2) eingeleitet wird.

## Claims

1. Steam temperature control device (1) for a gas and steam turbine plant, having a feed water line (2), a feed water control valve (3) arranged in the feed water line (2) and an injection water line (5) which branches off from the feed water line (2) upstream of the feed water control valve (3) in the direction of flow of the feed water and issues into an injection cooler (4), **characterized in that** an injection water preheater (6) is connected into the injection water line (5).

2. Steam temperature control device (1) according to Claim 1, wherein an injection water recirculation line (7) branches off from the injection water line (5) and issues into the feed water line (2) downstream of a feed water preheating surface (8) arranged in the feed water line (2) in the direction of flow of the feed water.

3. Steam temperature control device (1) according to Claim 2, wherein the injection water preheater (6) is arranged in an exhaust-gas duct (9) of a waste heat steam generator.

4. Steam temperature control device (1) according to Claim 3, wherein the injection water preheater (6) is arranged parallel to the feed water preheating surface (8) with respect to the direction of flow of an exhaust gas.

5. Method for controlling the steam temperature in a gas and steam turbine plant, **characterized in that** injection water is branched off from a feed water line (2) and then preheated and is fed in preheated form to at least one injection cooler (4).

6. Method according to Claim 5, wherein injection water is preheated in an exchange of heat with exhaust gas in a waste heat steam generator, before it is fed to an injection cooler (4).

7. Method according to Claim 6, wherein the injection water is preheated parallel to the feed water with respect to the direction of flow of an exhaust gas in the waste heat steam generator.

8. Method according to one of Claims 5 to 7, wherein recirculated injection water is introduced into the feed water line (2) downstream of a feed water preheating surface (8) in the direction of flow of a feed water.

## Revendications

1. Dispositif ( 1 ) de régulation de la température de la vapeur pour une installation de turbine à gaz et de turbine à vapeur, comprenant un conduit ( 2 ) d'eau d'alimentation, une vanne ( 3 ) de régulation de l'eau d'alimentation montée dans le conduit ( 2 ) d'eau d'alimentation et un conduit ( 5 ) d'eau d'injection bifurquant du conduit ( 2 ) d'eau d'alimentation dans le sens d'écoulement de l'eau d'alimentation avant la vanne ( 3 ) de régulation de l'eau d'alimentation et débouchant dans un dispositif ( 4 ) de refroidissement par injection, **caractérisé en ce qu'**un préchauffeur ( 6 ) d'eau d'injection est monté dans le conduit ( 5 ) d'eau d'injection.

2. Dispositif ( 1 ) de régulation de la température de la vapeur suivant la revendication 1, dans lequel un retour ( 7 ) d'eau d'injection bifurque du conduit ( 5 ) d'eau d'injection et débouche dans le conduit ( 2 ) d'eau d'alimentation, après une surface ( 8 ) de préchauffage de l'eau d'alimentation montée dans le conduit ( 2 ) d'eau d'alimentation.

3. Dispositif ( 1 ) de régulation de la température de la vapeur suivant la revendication 2, dans lequel le préchauffeur ( 6 ) d'eau d'injection est monté dans un canal ( 9 ) de gaz d'échappement d'un générateur de vapeur à récupération de la chaleur perdue.

4. Dispositif ( 1 ) de régulation de la température de la vapeur suivant la revendication 3, dans lequel le préchauffeur ( 6 ) d'eau d'injection est, rapporté au sens de l'écoulement d'un gaz d'échappement, monté parallèlement à la surface ( 8 ) de chauffe de l'eau d'alimentation.

5. Procédé de régulation de la température de la vapeur dans une installation de turbine à gaz et de turbine à vapeur, **caractérisé en ce que** l'on dérive de l'eau d'injection d'un conduit ( 2 ) d'eau d'alimentation, puis on la préchauffe et on l'envoie préchauffée à au moins un dispositif ( 4 ) de refroidissement d'injection.

6. Procédé suivant la revendication 5, dans lequel on préchauffe de l'eau d'injection en échange de chaleur avec du gaz d'échappement dans un générateur de vapeur à récupération de la chaleur perdue, avant de l'envoyer à un dispositif ( 4 ) de refroidissement d'injection.

7. Procédé suivant la revendication 6, dans lequel on préchauffe l'eau d'injection, rapporté au sens de l'écoulement d'un gaz d'échappement dans le générateur de vapeur à récupération de la chaleur perdue, en parallèle à l'eau d'alimentation.

8. Procédé suivant l'une des revendications 5 à 7, dans lequel on envoie dans le conduit ( 2 ) d'eau d'alimentation de l'eau d'injection recyclée, dans le sens de l'écoulement d'une eau d'alimentation après une surface ( 8 ) de chauffe de l'eau d'alimentation.
